# EUROPEAN PATENT APPLICATION

(11) **EP 4 495 401 A1**
(43) Date of publication of application: **22.01.2025**
(21) Application number: 24187440.3
(22) Date of filing: 09.07.2024
(51) Int. Cl.: F02C 3/22, F01D 19/00, F02C 9/40

(54) **GAS TURBINE ENGINE STARTING METHOD**

(30) Priority: 21.07.2023 GB 202311238
(71) Applicant: Rolls-Royce plc, London N1 9FX (GB)
(72) Inventor: Coulson, James, Derby, DE24 8BJ (GB); Palmer, Chloe, Derby, DE24 8BJ (GB); Wright, Adrian, Derby, DE24 8BJ (GB)
(74) Representative: Rolls-Royce plc

(57) **Abstract**

A method of starting a liquid hydrogen fuelled gas turbine engine (103) of an aircraft propulsion system. The aircraft propulsion system comprises a hydrogen storage tank (104) configured to store liquid hydrogen, a liquid hydrogen pump (205) configured to pump hydrogen in at least a liquid state, a core combustor (203) configured to receive hydrogen fuel from the hydrogen fuel pump (205), and a hydrogen fuel vent (214) provided downstream of the liquid hydrogen pump (205), and configured to selectively vent hydrogen fuel. The method comprises, in a liquid priming step, flowing hydrogen from the hydrogen storage tank (104) through the liquid hydrogen pump (205) and venting hydrogen through the hydrogen fuel vent (214) until the hydrogen pump (205) is primed with liquid hydrogen, then, in a liquid pumping step, operating the liquid hydrogen pump (205) to pump liquid hydrogen to the core combustor (203) at a required flow rate and pressure for engine ignition in an engine ignition step.

## Description

### TECHNICAL FIELD

This disclosure relates to methods of starting liquid hydrogen fuelled gas turbine engines, and an engine incorporating a controller to start the engine in accordance with the method.

### BACKGROUND

In order to limit emissions of carbon dioxide, use of hydrogen as an alternative to hydrocarbon fuel in gas turbine engines has historically only been practical in land-based installations. However, more recently there has been interest in aircraft powered by hydrogen stored at cryogenic temperatures, as either a compressed gas, a supercritical fluid, or a liquid.

One challenge of operating such gas turbine engines is pumping the liquid hydrogen. Hydrogen must be provided to the combustor at a pressure and flow rate sufficient to meet the requirements of the gas turbine engine.

However, liquid hydrogen pumps may be sensitive to cavitation (i.e. where both liquid and gaseous and / or supercritical hydrogen coexist within the pump at the same time). As such, starting gas turbine engines which are provided with fuel from liquid hydrogen pumps can be challenging.

### SUMMARY

In a first aspect there is provided a method of starting a liquid hydrogen fuelled gas turbine engine of an aircraft propulsion system, the aircraft propulsion system comprising:
a hydrogen storage tank configured to store liquid hydrogen;
a liquid hydrogen pump configured to pump hydrogen in at least a liquid state;
a core combustor configured to receive hydrogen fuel from the hydrogen fuel pump; and
a hydrogen fuel vent provided downstream of the liquid hydrogen pump, and configured to selectively vent hydrogen fuel; the method comprising:
   in a liquid priming step, flowing hydrogen from the hydrogen storage tank through the liquid hydrogen pump and venting hydrogen through the hydrogen fuel vent until the hydrogen pump is primed with liquid hydrogen, then, in a liquid pumping step, operating the liquid hydrogen pump to pump liquid hydrogen to the core combustor at a required flow rate and pressure for engine ignition in an engine ignition step.

Advantageously, the hydrogen pump is not required to operate on both gaseous and liquid hydrogen in order to start the engine, since operation of the hydrogen fuel vent enables the flow of gaseous hydrogen through the pump until the pump is sufficiently cooled to flow liquid hydrogen, whereupon the pump can operate without risk of cavitation. Such operation greatly simplifies hydrogen pump requirements, and reduces the risk of damage to the pump caused by cavitation.

The liquid hydrogen pump may comprise one of a positive displacement pump such as a piston pump, and a variable displacement pump such as a centrifugal or axial flow pump.

The gas turbine engine may comprise a pre-heater downstream in hydrogen fuel flow of the liquid hydrogen pump. The pre-heater may comprise an auxiliary combustor configured to combust a portion of hydrogen fuel with air to produce a heated exhaust flow. The pre-heater may comprise a heat exchanger configured to heat hydrogen fuel flow with heated exhaust flow.

The vent may be provided downstream in hydrogen fuel flow of the pre-heater, and upstream in hydrogen fuel flow of the core combustor. Advantageously, a single vent can be employed to vent the whole system, thereby minimising potential leak paths, and reducing weight and complexity.

The hydrogen storage tank may be configured to store hydrogen at an above-ambient pressure, and may be configured to store hydrogen at a pressure between 1 and 4 Bar.

The gas turbine engine may comprise a core compressor configured to provide pressurised air to the core combustor. The method may comprise operating the core compressor to provide compressed air to the preheater prior to operating the liquid hydrogen pump. Advantageously, compressed air is available prior to engine start, which enables the preheater to provide heated hydrogen, which can then enable main engine start.

The method may comprise, during the liquid pumping step, prior to the ignition step, operating the liquid hydrogen pump to provide liquid hydrogen to the core combustor at a pressure greater than the compressor delivery pressure prior to the ignition step. Advantageously, a positive pressure gradient is provided to the core combustor to allow for hydrogen to flow during starting.

The gas turbine engine may be configured to operate at a minimum overall pressure ratio at idle greater than the hydrogen storage tank pressure, such as an overall pressure ratio at idle of 4 bar or greater.

Advantageously, the engine can be started by operation of the pump, without requiring a high-pressure storage tank having a pressure sufficient to overcome the gas turbine engine overall pressure ratio. As such, both safety and weight can be improved.

In a second aspect, there is provided an aircraft propulsion system comprising a hydrogen fuelled gas turbine engine, the propulsion system comprising:
a hydrogen storage tank configured to store liquid hydrogen;
a liquid hydrogen pump configured to pump hydrogen in at least a liquid state;
a core combustor configured to receive hydrogen fuel from the hydrogen fuel pump; and
a hydrogen fuel vent provided downstream of the liquid hydrogen pump, and configured to selectively vent hydrogen fuel;
an engine start controller configured to:
   in a liquid priming step, flow hydrogen from the hydrogen storage tank fuel through the liquid hydrogen pump and vent hydrogen through the hydrogen fuel vent until the hydrogen pump is primed with liquid hydrogen, then, in a liquid pumping step, operate the liquid hydrogen pump to pump liquid hydrogen to the core combustor at a required flow rate and pressure for engine ignition in an engine ignition step.

### BRIEF DESCRIPTION OF THE DRAWINGS

An embodiment will now be described by way of example only with reference to the accompanying drawings, which are purely schematic and not to scale, and in which:
Figure 1 shows a hydrogen-fuelled airliner comprising a propulsion system comprising hydrogen-fuelled turbofan engines;
Figure 2 is a block diagram of a fuel system of the propulsion system of the aircraft of figure 1;
Figure 3 is a first part of a flow diagram illustrating a method of starting the aircraft propulsion system of figure 2; and
Figure 4 is a second part of a flow diagram illustrating a method of starting the aircraft propulsion system of figure 2.

### DETAILED DESCRIPTION

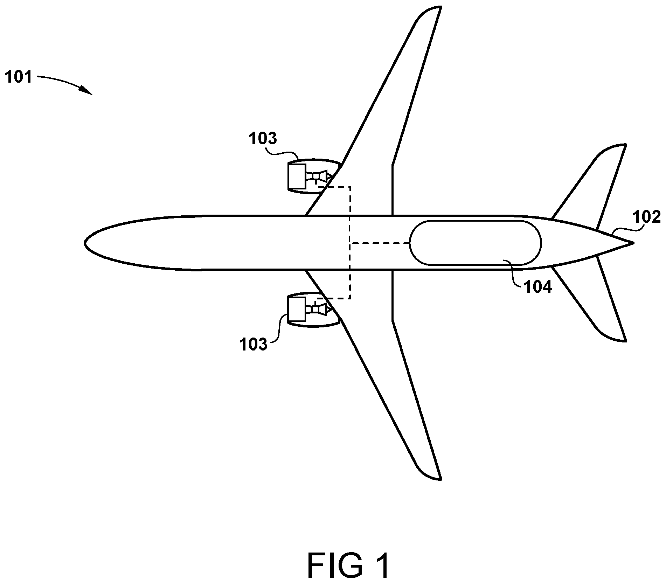

A hydrogen-fuelled airliner is illustrated in Figure 1. In this example, the airliner 101 is of substantially conventional tube-and-wing twinjet configuration with a central fuselage 102 and a propulsion system comprising substantially identical underwing-mounted turbofan engines 103.

A hydrogen storage tank 104 located in the fuselage 102. The hydrogen storage tank 104 is a cryogenic hydrogen storage tank and thus stores the hydrogen fuel in a liquid state, in a specific example at 22 Kelvin. In this example, the hydrogen fuel is pressurised to a pressure from around 1 bar to around 4 bar, in a specific example 4 bar. As will be appreciated, storing the hydrogen fuel at a higher pressure would necessitate heavier tanks to contain the pressure, and increase the risk of leaks. On the other hand, a lower pressure would increase the boiling point of the hydrogen, requiring a lower temperature in the tank, and would risk cavitation in downstream hydrogen plumbing.

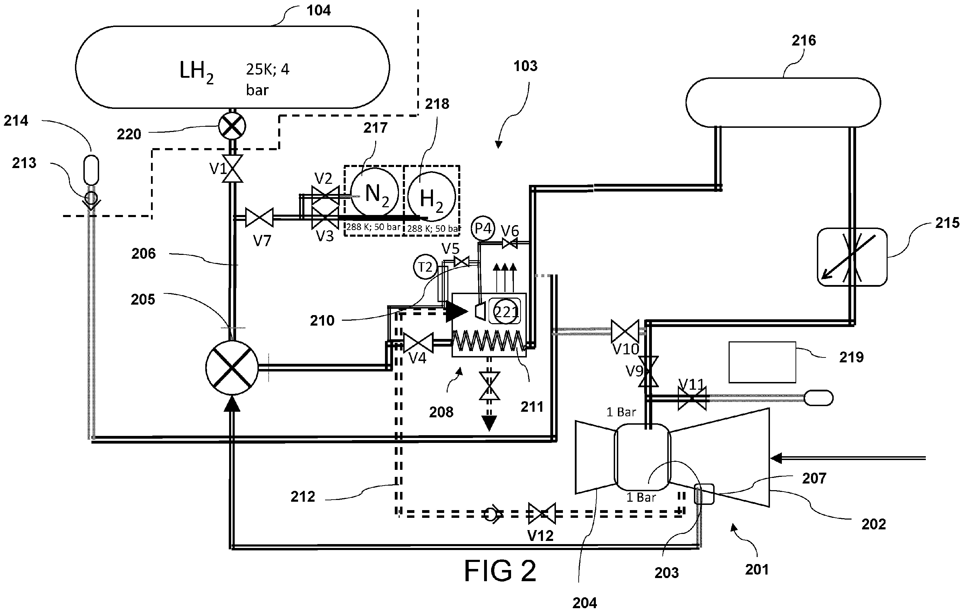

A block diagram of one of the propulsion system comprising one of the engines 103 is shown in Figure 2.

The turbofan engine 103 comprises a core gas turbine 201.

The core gas turbine 201 comprises, in fluid flow series, at least one compressor 202 (and possibly separate low and high-pressure compressors), a core combustor 203 and a turbine system 204 (which typically comprises separate low and high-pressure turbines). The compressor 202 is driven by the turbine 204 via a shaft (not shown), or separate shafts where multiple compressors and turbines are provided. A fan (not shown) is typically provided to provide propulsive thrust in addition to that generated by the engine core. It will be appreciated that in alternative embodiments, the core gas turbine could be of three-shaft configuration, and / or could comprise a reduction gearbox between the turbine and fan.

In operation, hydrogen fuel is pumped from the hydrogen storage tank 104 by a pump 205 and into a main fuel conduit 206 which ultimately delivers fuel to the core combustor 203. In the present embodiment, the pump 205 is driven by an electric machine driven by a main engine provided with electrical power from a main engine driven electrical generator 207. In other embodiments, the pump 205 may be driven by one or more of the gas turbine engine core shafts via an auxiliary gearbox (not shown). In some cases, a low-pressure pump 220 may also be provided, upstream of the high-pressure pump 205, and may be provided within the liquid hydrogen tank 104.

The pump 205 is typically configured to pump liquid hydrogen, rather than primarily to pump gaseous or supercritical hydrogen. As such, the fluid within the pump 205 is substantially incompressible during operation. Suitable pumps include positive displacement pumps (such as piston pumps) or variable displacement pumps such as a centrifugal or axial flow pumps. In the present embodiment, the pump 205 comprises a centrifugal flow pump. Such pumps comprise a vaned rotor provided within a housing, and are configured to take fluid from a central inlet, and provide this to an outlet provided at a radially outer position by operation of the vaned rotor. Such pumps are highly effective and efficient, but are sensitive to cavitation in operation, in view of the high velocity of the vanes, and the relatively high pressure differential per stage. Similar considerations apply to axial or mixed-flow variable displacement pumps.

As will be appreciated, it is desirable to increase the temperature of the fuel from the 22 Kelvin cryogenic storage condition to a temperature much closer to the firing temperature of the core gas turbine 201; of course this is subject to the constraint of not exceeding the autoignition temperature of the hydrogen fuel prior to admission into the combustor 207. In an example, the injection temperature is from 250 to 300 kelvin, for example 250 kelvin. In some cases, it may be desirable to increase the fuel temperature to above an icing temperature, such as 273 Kelvin.

In the present embodiment, a pre-heater 208 is therefore provided for heating of the hydrogen fuel, and possibly to implement a phase change. In the present embodiment, this takes place between the pump 205 and the core combustor 203. In an embodiment, the heater 218 is configured to raise the temperature of the hydrogen fuel to the required injection temperature.

The heater 208 comprises an offtake 210 configured to divert a portion of the hydrogen fuel from the main fuel conduit 206. The amount of hydrogen bled from the main fuel conduit 206 is controlled by a V5. In an embodiment, the valve V5 is controlled actively, for example in response to the temperature of the fuel at the core combustor 203. Alternatively, the valve may be passively controlled. In operation, of the order of around 1 percent of the hydrogen fuel flow through the main fuel conduit 206 is bled for use in the heater 208.

As described previously, hydrogen has very high specific and latent heat capacities; however as a gas it has a very low molecular weight and density, and thus it can be challenging to exchange heat in a compact way. However, these properties may also be beneficial, as described later herein. Thus, the heater 208 heats the hydrogen fuel in the main fuel conduit 206 by combustion of the bled fuel in a burner 221 located in heat exchange relationship with the main fuel conduit 206 via a heat exchanger 211. As will be understood, fuel for the burner 221 must also be provided at an acceptable temperature, and a smaller auxiliary fuel heater T2 may be provided for this.

In order to reduce the volume of the burner 208, it is desirable to use a high-pressure source of air, which provides sufficient mass-flow in a small volume to combust the hydrogen fuel. As such, air for combustion with the bled hydrogen fuel is bled from a compressor of the gas turbine engine core, and in this embodiment, from the compressor 204 via a bleed line 212. Flow through the bleed line is controlled by compressor bleed valve V12.

Fuel flow through the system between the tank 104 and core combustor 203 is controlled by a plurality of valves and a Fuel Management Unit (FMU) 215, which actively controls fuel flow rate and pressure delivered to the core combustor 203. An optional buffer tank 216 may be provided, configured to store hydrogen gas from downstream of the pre-heater 208 to manage transient pressures and flow rates.

A purging and priming system is also provided, which comprises a supply of one or more purging and priming gases, and one or more valves to control supply of those gases.

In the present embodiment, a purging gas comprising an inert gas such as nitrogen (as in the described embodiment) or helium is provided in a purge tank 217. A separate priming gas comprising gaseous or supercritical hydrogen is suppled in a priming tank 218. Both the priming and purging gas tanks 217, 218 are connected to the main fuel conduit 206 at a junction between the liquid hydrogen tank 104 and the liquid hydrogen pump 215 via a purging valve V2, a priming valve V4 and a further control valve V7.

In order to assist with flow through the main fuel conduit 206, and to ensure safety, a venting system is provided. The venting system includes at least a first vent valve V10 provided downstream of the liquid hydrogen pump 205 in hydrogen fuel flow, and is configured to vent hydrogen within the conduit 206 to atmosphere. The vent valve V10 is configured to vent hydrogen from a point upstream in hydrogen fuel flow of the combustor 203. In some embodiments, the venting system may additionally comprise a check valve 213 to ensure air does not enter the system, and a pilot combustor 214 to flare hydrogen fuel prior to venting to atmosphere. Additional optional vents may also be provided, including a second vent valve V11 provided downstream in hydrogen fuel flow of the FMU.

Additional valves are also provided to control fuel flow through the system. Valve V1 controls flow from the liquid hydrogen tank into the main fuel conduit 206. Valves V5 and V6 controls fuel flowing into / bypassing the preheater 208. Combustor entry valve V9 controls flow of fuel into the combustor 203 from the FMU 215. In fluid flow series therefore, there is provided the tank 104, low-pressure fuel pump 220, high-pressure fuel pump 205, valve V4, pre-heater 208, buffer tank 216, FMU 215, and valves V10 and V9.

The system is controlled by an overall engine controller 219, which controls each of the valves, the pump 205, the pre-heater 208 and the gas turbine engine core 201. In some embodiments, two or more controllers may be provided.

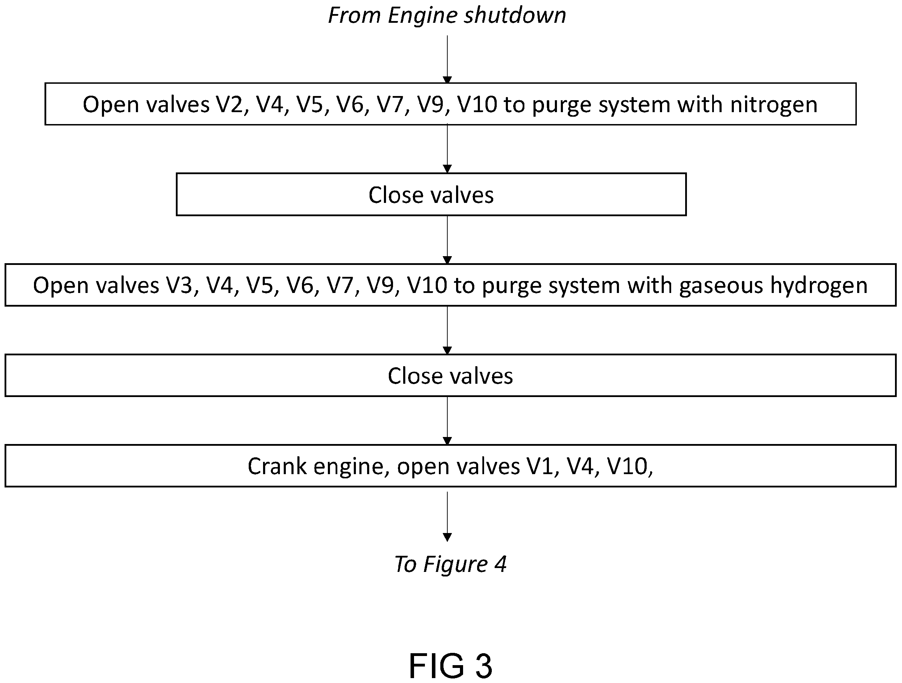

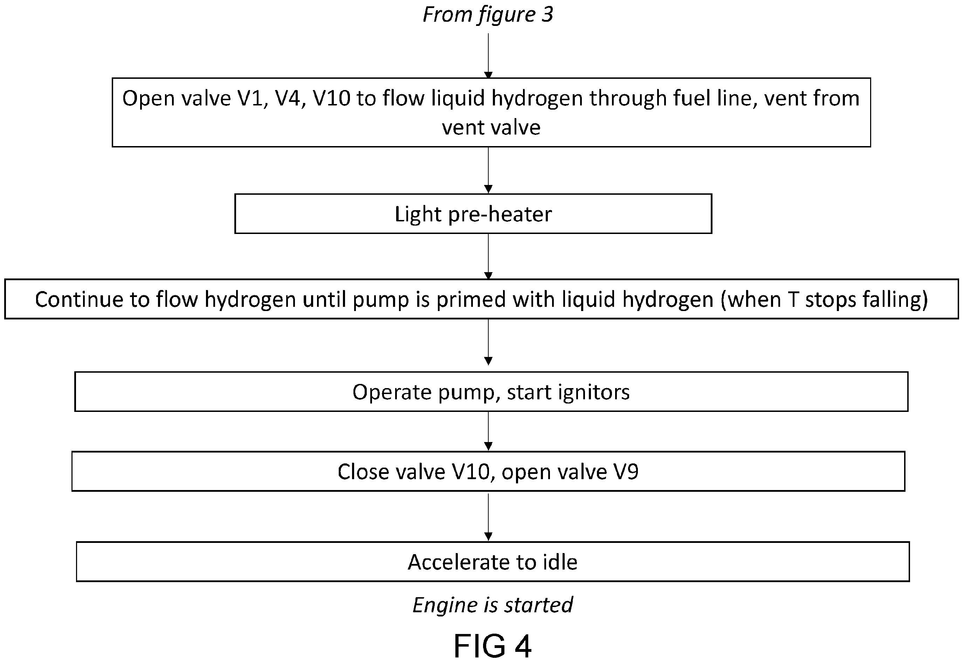

Figures 3 and 4 show a flow diagram illustrating a method of starting the gas turbine engine 201 from a shut-down condition to a fully started condition.

In a first step, the fuel system is purged. Purging is necessary to remove any air from the system, which would comprise oxygen and present a fire hazard if mixed with hydrogen. Additionally, any liquid water would freeze at the temperatures present in the fuel system.

During the purging step, valves V2 and V7 are opened to allow nitrogen to flow from the purging tank 217 into the fuel conduit 216. Valves V4, V5, V6, V9 and venting valve V10 are opened, to permit the nitrogen to flow through each of the preheater 208, buffer tank 216, FMU 215, core combustor 203 and vent line to atmosphere, to remove air and water vapour from each of these systems.

Once the system is purged, all valves are closed again to seal the system from ingress with air. The vent valve V10 may be closed first, to maintain pressure in the system.

In a second step, the system is primed with relatively warm gaseous hydrogen from the priming tank 218 into the fuel conduit. Valves V3, V7 V4, V5, V6, V9 and venting valve V10 are opened, to permit the hydrogen to flow through each of the preheater 208, buffer tank 216, FMU 215, core combustor 203 and vent line, to remove the nitrogen purge gas from each of these systems, which would otherwise freeze on introduction of liquid hydrogen to the system.

During the purging and priming processes, the engine may be "cranked", that is to say, the engine compressor is rotated to generate a flow of air through the engine, and to generate high-pressure compressor air flow. The engine may be rotated by the starter-generator 207 acting as a motor, or by other suitable means. This may comprise rotating the compressor at an idle compressor speed, or somewhat below idle.

Once the system is fully primed with gaseous hydrogen, the starting process can continue. The engine compressor 202 is cranked, or continues to be cranked, to generate sufficient compressed airflow and pressure for delivery of a required inlet pressure at the pre-heater 208 to support combustion.

As will be appreciated, the air pressure generated by the compressor 202 will be relatively high, to both enable stable combustion within the combustor, and to provide sufficient airflow and pressure to allow for combustion in the pre-heater 208. Typical compressor delivery pressures at this stage may exceed 4 Bar. On the other hand, the only driver of fuel flow through the system is tank pressure within the liquid hydrogen tank 104. Typically, tank pressure is around 4 Bar, or in some cases may be as low as 1 Bar. Pressure losses within the fuel system may reduce the available pressure further. As such, hydrogen cannot flow to the engine core combustor 203 from the tank 104, as the pressure gradient acts in the wrong direction. If the valve V9 is opened at this stage, air will flow from the combustor into the main fuel conduit.

It would be desirable to operate the pump 205 at this stage, to provide the necessary flow and pressure for starting. However, the hydrogen within the fluid conduit is a gas or a supercritical fluid. It may be difficult to design a pump which can operate on both gas and liquid to provide the necessary flow conditions for starting using gas, and the necessary conditions to normal operation using liquid.

Additionally, liquid hydrogen flowing into the pump will tend to vaporise as it enters the relatively warm pump 205. As such, a "chill-down" procedure is required, wherein liquid hydrogen is allowed to flow through the system while boiling off, until the system is sufficiently cold to permit flow of liquid hydrogen.

To begin this process, in a third, liquid priming step, valve V1 is opened to permit liquid hydrogen to flow into the main fuel conduit 206. As the liquid enters the main fuel conduit 206, the liquid is flashed to gas, which raises the pressure within the conduit 206. If this pressure were allowed to equalise with the pressure in the tank 104, this would halt flow before the system is fully chilled, thereby preventing starting. Consequently, the starting method includes opening valves V4 (to permit flow through the preheater 208) and vent valve V10, while combustor entry valve V9 is closed to prevent compressed air from entering the system. Hydrogen is thereby vented from the system to atmosphere at a point downstream of at least the pump 205 and preferably the heater 208, thereby enabling chilldown of both components and the main fuel conduit.

The cold hydrogen in the main fuel line now needs to be warmed again, before it can be burned in the combustor. As such, the pre-heater 208 is now started using gaseous fuel flow through the main fuel conduit, and compressed air from the compressor 202. This now provides warmed hydrogen downstream of the pre-heater, while chilled hydrogen continues to flow upstream.

As hydrogen continues to flow, the pump 205 cools, until liquid hydrogen fills the pump 205 to the extend that it can be considered "primed", i.e. is filled with liquid hydrogen at a temperature such that the pump can operate without risk of unacceptable levels of cavitation, stalling or other performance issues which would prevent the pump from raising pressure. Typically, this occurs when the temperature stops falling within the pump, i.e. the temperature is stabilised at a temperature at which liquid hydrogen can exist at the pressure within the pump.

At this point, the pump 205 can now be operated, in a fourth, pumping step, to increase the pressure and flow rate within the fuel conduit 206, such that the compressor pressure can be overcome. Typically, a fuel pressure approximately 1.5 times the compressor delivery pressure is required to deliver fuel to the combustor 203. The ignitors for the combustor can also now be actuated in anticipation of engine ignition.

Venting can now cease, since fuel can be delivered to the combustor 203. As such, vent valve V10 is closed, and combustor entry valve V9 can be opened, to allow hydrogen to flow into the combustor 203. Ignitors then enable ignition in an ignition step, since now both fuel and air are present in the combustor 203 at sufficient temperature, pressure and flow rate to allow for combustion. The engine is allowed to accelerate to idle by control of fuel flow via the FMU 215, and is now started.

As such, a method is described, in which a gas turbine engine fuelled by liquid hydrogen can be started, without requiring high-pressure tanks, or pumps capable of raising pressure of gaseous hydrogen. Risks of cavitation are reduced, thereby increasing pump life. Alternatively, the engine core combustor 206 can be designed to function at higher minimum pressures, as the hydrogen storage pressure no longer dictates starting pressure. This may allow for a smaller, lighter combustor. Similarly, the main liquid hydrogen tank can be configured to operate at a lower pressure, thereby reducing tank weight. Additionally, risks of air entering the main fuel conduit and mixing with hydrogen are also reduced, since a positive pressure gradient between the tank 104 and combustor 206 is maintained for most, if not all stages of operation.

Additional advantages include a reduced chill-down time, a reduced engine cranking time (thereby improving engine life), and improved safety. In particular, by venting fuel to an external vent rather than through the combustor prior to starting, mixing of high-pressure air and fuel is avoided.

Various examples have been described, each of which comprise various combinations of features. It will be appreciated by those skilled in the art that, except where clearly mutually exclusive, any of the features may be employed separately or in combination with any other features and thus the disclosed subject-matter extends to and includes all such combinations and sub-combinations of the or more features described herein.

Changes may be made to the disclosed embodiment without departing from the invention as defined by the claims. For example, the preheater may be omitted, or replaced with a pre-heater that does not require compressed air to operate, such as an electrical heater or a recuperator. Similarly, the gas turbine engine could be of a different form, and could comprise two or even three shafts, with associated compressors and turbines.

## Claims

1. A method of starting a liquid hydrogen fuelled gas turbine engine (103) of an aircraft propulsion system, the aircraft propulsion system comprising:
a hydrogen storage tank (104) configured to store liquid hydrogen;
a liquid hydrogen pump (205) configured to pump hydrogen in at least a liquid state;
a core combustor (203) configured to receive hydrogen fuel from the hydrogen fuel pump (205); and
a hydrogen fuel vent (214) provided downstream of the liquid hydrogen pump (205), and configured to selectively vent hydrogen fuel; the method comprising:
in a liquid priming step, flowing hydrogen from the hydrogen storage tank (104) through the liquid hydrogen pump (205) and venting hydrogen through the hydrogen fuel vent (214) until the hydrogen pump (205) is primed with liquid hydrogen, then, in a liquid pumping step, operating the liquid hydrogen pump (205) to pump liquid hydrogen to the core combustor (203) at a required flow rate and pressure for engine ignition in an engine ignition step.

2. A method according to claim 1, wherein the liquid hydrogen pump comprises one of a positive displacement pump such as a piston pump, and a variable displacement pump such as a centrifugal or axial flow pump (205).

3. A method according to claim 1 or claim 2, wherein the gas turbine engine comprises a pre-heater (208) downstream in hydrogen fuel flow of the liquid hydrogen pump (205), the pre-heater comprising a heat exchanger (211) configured to heat hydrogen fuel flow with heated exhaust flow.

4. A method according to claim 3, wherein the pre-heater (208) comprises an auxiliary combustor (221) configured to combust a portion of hydrogen fuel with air to produce a heated exhaust flow.

5. A method according to claim 3 or claim 4, wherein the vent (214) is provided downstream in hydrogen fuel flow of the pre-heater (208), and upstream in hydrogen fuel flow of the core combustor (203).

6. A method according to any of the preceding claims, wherein the hydrogen storage tank is configured to store hydrogen at an above-ambient pressure, and may be configured to store hydrogen at a pressure between 1 and 4 Bar.

7. A method according to any of the preceding claims, wherein the gas turbine engine (103) comprises a core compressor (202) configured to provide pressurised air to the core combustor (203) and the method comprises operating the core compressor (202) to provide compressed air to the preheater (208) prior to operating the liquid hydrogen pump (205).

8. A method according to any of the preceding claims, wherein the method comprises, during the liquid pumping step, prior to the ignition step, operating the liquid hydrogen pump (205) to provide liquid hydrogen to the core combustor (203) at a pressure greater than the compressor delivery pressure prior to the ignition step.

9. A method according to any of the preceding claims, wherein the method comprises operating the gas turbine engine (103) at a minimum overall pressure ratio at idle greater than the hydrogen storage tank pressure, such as an overall pressure ratio at idle of 4 bar or greater.

10. An aircraft propulsion system comprising a hydrogen fuelled gas turbine engine (103), the propulsion system comprising:
a hydrogen storage tank (104) configured to store liquid hydrogen;
a liquid hydrogen pump (205) configured to pump hydrogen in at least a liquid state;
a core combustor (203) configured to receive hydrogen fuel from the hydrogen fuel pump (205); and
a hydrogen fuel vent (214) provided downstream of the liquid hydrogen pump (205), and configured to selectively vent hydrogen fuel;
an engine start controller configured to:
in a liquid priming step, flow hydrogen from the hydrogen storage tank (104) fuel through the liquid hydrogen pump (205) and vent hydrogen through the hydrogen fuel vent (214) until the hydrogen pump (205) is primed with liquid hydrogen, then, in a liquid pumping step, operate the liquid hydrogen pump (205) to pump liquid hydrogen to the core combustor (203) at a required flow rate and pressure for engine ignition in an engine ignition step.

11. An aircraft propulsion system according to claim 12, wherein the liquid hydrogen pump comprises one of a positive displacement pump such as a piston pump, and a variable displacement pump such as a centrifugal or axial flow pump (205).

12. An aircraft propulsion system according to claim 10 or claim 11, wherein the gas turbine engine comprises a pre-heater (208) downstream in hydrogen fuel flow of the liquid hydrogen pump (205), the pre-heater (208) comprising a heat exchanger (211) configured to heat hydrogen fuel flow with heated exhaust flow.

13. An aircraft propulsion system according to claim 12, wherein the preheater (208) comprises an auxiliary combustor (221) configured to combust a portion of hydrogen fuel with air to produce a heated exhaust flow.

14. An aircraft propulsion system according to any of claims 10 to 13, wherein the vent (214) is provided downstream in hydrogen fuel flow of the pre-heater (208), and upstream in hydrogen fuel flow of the core combustor (203).

15. An aircraft propulsion system according to any of claims 10 to 14, wherein the hydrogen storage tank is configured to store hydrogen at an above-ambient pressure, and may be configured to store hydrogen at a pressure between 1 and 4 Bar.
